# EUROPÄISCHE PATENTANMELDUNG

(11) **EP 3 037 778 A1**
(43) Veröffentlichungstag der Anmeldung: **29.06.2016**
(21) Anmeldenummer: 14200036.3
(22) Anmeldetag: 23.12.2014
(51) Int. Cl.: G01C 15/00, G01V 3/15

(54) **Verfahren zum Überprüfen von Objekteigenschaften eines Objektes in einem Untergrund**

(71) Anmelder: HILTI Aktiengesellschaft, 9494 Schaan (LI)
(72) Erfinder: Gogolla, Torsten, 9494 Schaan (LI); Schoenbeck, Dietmar, 6811 Goefis (AT); Korl, Sascha, 9470 Buchs (CH); Neumann, Jens, 9472 Grabs (CH)
(74) Vertreter: Hilti Aktiengesellschaft Corporate Intellectual Property

(57) **Zusammenfassung**

Verfahren zum Überprüfen von Objekteigenschaften eines Objektes (23, 25) in einem Untergrund (18) mittels einer Vorrichtung (10), die eine Detektoreinrichtung (11), eine Lokalisierungseinrichtung (12) und eine Kontrolleinrichtung (13) aufweist, wobei:
▪ in einem ersten Schritt ein erstes Objekt mit zu prüfenden ersten Objekteigenschaften und ersten Soll-Koordinaten ausgewählt wird,
▪ in einem zweiten Schritt mittels der Lokalisierungseinrichtung (12) eine aktuelle Position der Detektoreinrichtung (11) bestimmt wird,
▪ in einem dritten Schritt von der Kontrolleinrichtung (13) aus der aktuellen Position der Detektoreinrichtung (11) ein aktuelles Detektionsfeld bestimmt wird und
▪ in einem vierten Schritt die ersten Soll-Koordinaten von der Kontrolleinrichtung (13) mit dem aktuellen Detektionsfeld der Detektoreinrichtung (11) verglichen werden.

## Beschreibung

### Technisches Gebiet

Die vorliegende Erfindung betrifft ein Verfahren zum Überprüfen von Objekteigenschaften eines Objektes in einem Untergrund gemäß dem Oberbegriff des Anspruchs 1.

### Stand der Technik

Aus DE 20 2010 016 564 U1 ist eine Vorrichtung zum Detektieren von Objekten in einem Untergrund bekannt. Die Vorrichtung umfasst eine Detektoreinrichtung, eine Lokalisierungseinrichtung und eine Kontrolleinrichtung. Der Bediener bewegt die Detektoreinrichtung über die Grenzfläche, wobei die Detektoreinrichtung eine Reihe von Messungen ausführt. Die Lokalisierungseinrichtung ermittelt während des Messbetriebs regelmäßig die aktuelle Position der Detektoreinrichtung. Die Messdaten der Detektoreinrichtung und die Positionsdaten der Lokalisierungseinrichtung werden an die Kontrolleinrichtung übermittelt, die die Mess- und Positionsdaten zuordnet und speichert. Die Mess- und Ortsdaten können von der Kontrolleinrichtung weiter verarbeitet und beispielsweise auf einem Bildschirm dargestellt werden.

### Darstellung der Erfindung

Die Aufgabe der vorliegenden Erfindung besteht in der Entwicklung eines Verfahrens zum Überprüfen von Objekteigenschaften eines Objektes in einem Untergrund.

Diese Aufgabe wird bei dem eingangs genannten Verfahren zum Überprüfen von Objekteigenschaften eines Objektes in einem Untergrund erfindungsgemäß durch die Merkmale des unabhängigen Anspruchs 1 gelöst. Vorteilhafte Weiterbildungen sind in den abhängigen Ansprüchen angegeben.

Erfindungsgemäß ist das Verfahren zum Überprüfen von Objekteigenschaften eines Objektes in einem Untergrund mittels einer Vorrichtung, die eine Detektoreinrichtung, eine Lokalisierungseinrichtung und eine Kontrolleinrichtung aufweist, dadurch gekennzeichnet, dass:
▪ in einem ersten Schritt ein erstes Objekt mit mindestens einer zu prüfenden ersten Objekteigenschaft und ersten Soll-Koordinaten ausgewählt wird,
▪ in einem zweiten Schritt mittels der Lokalisierungseinrichtung eine aktuelle Position der Detektoreinrichtung im Raum bestimmt wird,
▪ in einem dritten Schritt von der Kontrolleinrichtung aus der aktuellen Position der Detektoreinrichtung ein aktuelles Detektionsfeld bestimmt wird und
▪ in einem vierten Schritt die ersten Soll-Koordinaten von der Kontrolleinrichtung mit dem aktuellen Detektionsfeld der Detektoreinrichtung verglichen werden.

Das erfindungsgemäße Verfahren befasst sich damit, die Objekteigenschaften eines bekannten Objektes mittels einer Detektoreinrichtung zu prüfen. Unter dem Begriff "Objekt" werden sämtliche Elemente, die in einem Untergrund angeordnet sind, zusammengefasst. Beispiele für Objekte, die mittels der Detektoreinrichtung bestimmt werden, sind Stromleitungen, Rundfunkleitungen, Leerrohre, Wasserleitungen, Heizungsrohre und Armierungseisen. Bei einer Wasserleitung zählen beispielsweise das Material (Kupfer oder Kunststoff), der Durchmesser, die Lage und die Verwendung als Warm- oder Kaltwasserleitung zu den Objekteigenschaften, die überprüft werden können. Bei einer Stromleitung sind unter anderem das Material, der Abstand und die Lage zu anderen Leitungsarten und die Verwendung als Stark- oder Niederstromkabel Objekteigenschaften, die mittels einer Detektoreinrichtung überprüft werden können. Bei der Einbettung von Armierungseisen in Betondecken kann überprüft werden, ob die angegebene Menge an Armierungseisen eingebettet wurde und ob die nach dem Stand der Technik optimalen Abstände zwischen den Armierungseisen eingehalten werden.

Notwendige Voraussetzung für das erfindungsgemäße Verfahren ist, dass die Soll-Koordinaten des zu prüfenden Objektes bekannt sind. Die Soll-Koordinaten können als absolute Koordinaten oder als relative Koordinaten bezogen auf ein Referenzobjekt vorliegen. Für die Anwendung besonders relevant ist die Möglichkeit, mit Hilfe des erfindungsgemäßen Verfahrens die Angaben eines Konstruktionsplans zu überprüfen. In einem Konstruktionsplan ist eine Vielzahl an Objekten mit ihren Objekteigenschaften und Soll-Koordinaten enthalten. Der Konstruktionsplan sollte für die Kontrolleinrichtung in lesbarer Form ausgebildet sein, um die Daten des Objektes direkt aus dem Konstruktionsplan laden zu können; anderenfalls müssen die Daten des Objektes vom Bediener manuell in die Kontrolleinrichtung eingegeben werden.

Im ersten Schritt des erfindungsgemäßen Verfahrens wird ein zu prüfendes erstes Objekt mit zugehörigen ersten Soll-Koordinaten ausgewählt und die zu prüfenden Objekteigenschaften des ersten Objektes werden festgelegt. Bevor eine Messung mittels der Detektoreinrichtung ausgeführt wird, muss die Detektoreinrichtung bei einem Punktdetektor über dem ersten Objekt positioniert und bei einem scannenden Detektor über das Objekt hinweg bewegt werden.

Dazu wird im zweiten Schritt mittels der Lokalisierungseinrichtung die aktuelle Position der Detektoreinrichtung im Raum bestimmt. Aus der aktuellen Position der Detektoreinrichtung bestimmt die Kontrolleinrichtung im dritten Schritt das aktuelle Detektionsfeld der Detektoreinrichtung; der Zusammenhang zwischen der aktuellen Position und dem Detektionsfeld der Detektoreinrichtung ist bekannt. Im Falle des scannenden Detektors entspricht das Detektionsfeld dem lokalen Scanbereich um das Objekt herum. Anschließend werden im vierten Schritt des Verfahrens die ersten Soll-Koordinaten von der Kontrolleinrichtung mit dem aktuellen Detektionsfeld der Detektoreinrichtung verglichen.

Die weiteren Verfahrensschritte des erfindungsgemäßen Verfahrens hängen vom Vergleich der ersten Soll-Koordinaten des ersten Objektes mit dem aktuellen Detektionsfeld der Detektoreinrichtung ab. Dabei werden drei Varianten unterschieden: In einer ersten Variante ist das erste Objekt innerhalb des aktuellen Detektionsfeldes angeordnet, in einer zweiten Variante ist das erste Objekt zumindest teilweise außerhalb des aktuellen Detektionsfeldes angeordnet und in einer dritten Variante sind die Abmessungen des ersten Objektes grösser als das aktuelle Detektionsfeld der Detektoreinrichtung.

In der ersten Variante des Verfahrens wird mittels der Detektoreinrichtung mindestens eine Messung im Untergrund ausgeführt, wenn die ersten Soll-Koordinaten des ersten Objektes innerhalb des aktuellen Detektionsfeldes angeordnet sind. Das erfindungsgemäße Verfahren hat den Vorteil, dass das Auslösen einer Messung oder einer Serie von Messungen im Untergrund mittels der Detektoreinrichtung automatisch durch die Kontrolleinrichtung erfolgt.

Besonders bevorzugt wird die Messung von der Detektoreinrichtung mit Detektionsparametern ausgeführt, die an die zu prüfenden ersten Objekteigenschaften des ersten Objektes angepasst sind. Dadurch, dass die Objekteigenschaften des ersten Objektes bekannt sind, können die Detektionsparameter, mit denen die Detektoreinrichtung eine oder mehrere Messungen ausführt, an die zu prüfenden Objekteigenschaften angepasst werden. Die Messung mit angepassten Detektionsparametern erhöht die Genauigkeit und Zuverlässigkeit der Messergebnisse.

In der zweiten Variante des Verfahrens wird aus der aktuellen Position der Detektoreinrichtung und den ersten Soll-Koordinaten des ersten Objektes von der Kontrolleinrichtung eine Verstellanweisung für die Detektoreinrichtung berechnet und auf einer Anzeigeeinrichtung dargestellt, wenn die ersten Soll-Koordinaten des ersten Objektes zumindest teilweise außerhalb des aktuellen Detektionsfeldes angeordnet sind. Der zweite bis vierte Schritt des erfindungsgemäßen Verfahrens wird während der Bewegung der Detektoreinrichtung regelmäßig wiederholt, bis die ersten Soll-Koordinaten des ersten Objektes innerhalb des aktuellen Detektionsfeldes der Detektoreinrichtung angeordnet sind.

In der dritten Variante des Verfahrens wird von der Kontrolleinrichtung eine Verstellanweisung für die Detektoreinrichtung berechnet und auf einer Anzeigeeinrichtung dargestellt und während der Bewegung mittels der Detektoreinrichtung eine Reihe von Messungen im Untergrund ausgeführt, wenn die ersten Soll-Koordinaten des ersten Objektes teilweise innerhalb des aktuellen Detektionsfeldes angeordnet und die Abmessungen des ersten Objektes grösser als das aktuelle Detektionsfeld sind. Die dritte Variante ist für Objekte relevant, deren Abmessungen die Größe des Detektionsfeldes übersteigen, wie beispielsweise Stromleitungen, Wasserleitungen und Armierungseisen.

In einer bevorzugten Ausführung des Verfahrens werden die Untergrundmessung mit der Detektoreinrichtung und die Positionsbestimmung mit der Lokalisierungseinrichtung gleichzeitig von der Kontrolleinrichtung gestartet. Durch den zeitgleichen Start der Positionsbestimmung und die Untergrundmessung sind die Lokalisierungseinrichtung und die Detektoreinrichtung synchronisiert. Da sich die Messzeiten für die Positionsbestimmung mit der Lokalisierungseinrichtung und die Untergrundmessung mit der Detektoreinrichtung in der Regel voneinander unterscheiden, werden die Positionswerte und die Messergebnisse nicht zeitgleich ermittelt. Durch die Synchronisierung können die gemessenen Positionswerte und Messergebnisse der Untergrundmessung einander zugeordnet werden. Je näher die Zeitpunkte für die Positionsbestimmung und die Untergrundmessung beieinander liegen, umso kleiner ist der Fehler bei den Ortskoordinaten.

In einer Weiterentwicklung ist das erfindungsgemäße Verfahren zusätzlich dadurch gekennzeichnet, dass im ersten Schritt neben dem ersten Objekt ein zweites Objekt mit zu prüfenden zweiten Objekteigenschaften und zweiten Soll-Koordinaten ausgewählt wird und im vierten Schritt neben den ersten Soll-Koordinaten des ersten Objektes die zweiten Soll-Koordinaten des zweiten Objektes mit dem aktuellen Detektionsfeld der Detektoreinrichtung verglichen werden. Das weiterentwickelte Verfahren hat den Vorteil, dass mehrere Objekte mittels der Detektoreinrichtung überprüft werden können.

Die weiteren Verfahrensschritte des erfindungsgemäßen Verfahrens hängen vom Vergleich der ersten Soll-Koordinaten des ersten Objektes und der zweiten Soll-Koordinaten des zweiten Objektes mit dem aktuellen Detektionsfeld der Detektoreinrichtung ab. Dabei werden drei Varianten unterschieden: In einer ersten Variante ist eines der beiden Objekte innerhalb des Detektionsfeldes angeordnet, in einer zweiten Variante sind beide Objekte innerhalb des Detektionsfeldes angeordnet und in einer dritte Variante sind beide Objekte außerhalb des Detektionsfeldes angeordnet.

In der ersten Variante wird mittels der Detektoreinrichtung mindestens eine Messung im Untergrund ausgeführt, wenn die ersten Soll-Koordinaten des ersten Objektes oder die zweiten Soll-Koordinaten des zweiten Objektes innerhalb des aktuellen Detektionsfeldes der Detektoreinrichtung angeordnet sind. Dabei wird die mindestens eine Messung von der Detektoreinrichtung besonders bevorzugt mit Detektionsparametern ausgeführt, die an die Objekteigenschaften des innerhalb des aktuellen Detektionsfeldes angeordneten Objektes angepasst sind. Die Messung mit angepassten Detektionsparametern erhöht die Genauigkeit und Zuverlässigkeit der Messergebnisse, die die Detektoreinrichtung ermittelt.

Besonders bevorzugt wird nach der Untergrundmessung mit der Detektoreinrichtung aus der aktuellen Position der Detektoreinrichtung und den Soll-Koordinaten des außerhalb des aktuellen Detektionsfeldes angeordneten Objektes von der Kontrolleinrichtung eine Verstellanweisung für die Detektoreinrichtung berechnet und auf einer Anzeigeeinrichtung dargestellt. Der zweite bis vierte Schritt des erfindungsgemäßen Verfahrens werden während der Bewegung der Detektoreinrichtung regelmäßig wiederholt, bis auch das weitere Objekt innerhalb des aktuellen Detektionsfeldes der Detektoreinrichtung angeordnet ist und eine Messung mit der Detektoreinrichtung erfolgen kann.

In der zweiten Variante wird mittels der Detektoreinrichtung mindestens eine Messung im Untergrund ausgeführt, wenn die ersten Soll-Koordinaten des ersten Objektes und die zweiten Soll-Koordinaten des zweiten Objektes innerhalb des aktuellen Detektionsfeldes der Detektoreinrichtung angeordnet sind.

Besonders bevorzugt werden mittels der Detektoreinrichtung eine erste Messung mit ersten Detektionsparametern, die an die ersten Objekteigenschaften des ersten Objektes angepasst sind, und eine zweite Messung mit zweiten Detektionsparametern, die an die zweiten Objekteigenschaften des zweiten Objektes angepasst sind, ausgeführt. Bei Objekten mit unterschiedlichen Objekteigenschaften, beispielsweise verschiedenen Materialien oder Tiefen im Untergrund, können sich die optimalen Detektionsparameter stark voneinander unterscheiden. Mehrere Messungen mit jeweils angepassten Detektionsparametern können die Genauigkeit der Messergebnisse verbessern.

In der dritten Variante werden aus der aktuellen Position der Detektoreinrichtung sowie den ersten Soll-Koordinaten des ersten Objektes und den zweiten Soll-Koordinaten des zweiten Objektes von der Kontrolleinrichtung ein erster Abstand und ein zweiter Abstand berechnet, wenn die ersten Soll-Koordinaten des ersten Objektes und die zweiten Soll-Koordinaten des zweiten Objektes außerhalb des aktuellen Detektionsfeldes der Detektoreinrichtung angeordnet sind. Der erste Abstand stellt die Differenz des ersten Objektes zur aktuellen Position der Detektoreinrichtung dar und der zweite Abstand entsprechend die Differenz des zweiten Objektes zur aktuellen Position der Detektoreinrichtung.

Besonders bevorzugt werden der erste Abstand und der zweite Abstand von der Kontrolleinrichtung miteinander verglichen und für das Objekt mit dem geringeren Abstand zur aktuellen Position der Detektoreinrichtung wird von der Kontrolleinrichtung eine Verstellanweisung für die Detektoreinrichtung berechnet und auf einer Anzeigeeinrichtung dargestellt.

In einer Weiterentwicklung ist das erfindungsgemäße Verfahren zusätzlich dadurch gekennzeichnet, dass im zweiten Schritt mittels der Lokalisierungseinrichtung neben der aktuellen Position der Detektoreinrichtung eine aktuelle Orientierung der Detektoreinrichtung bestimmt wird. Besonders bevorzugt wird im dritten Schritt das aktuelle Detektionsfeld der Detektoreinrichtung von der Kontrolleinrichtung aus der aktuellen Position und der aktuellen Orientierung der Detektoreinrichtung bestimmt. Durch die Bestimmung der aktuellen Orientierung wird die Genauigkeit, mit der die Ausrichtung der Detektoreinrichtung bestimmt werden kann, erhöht. Die aktuelle Orientierung der Detektoreinrichtung kann beispielsweise mit Hilfe einer Kamera oder durch Differenzbildung zwischen mehreren bekannten Markierungen, die auf der Detektoreinrichtung angebracht sind, bestimmt werden. Hier eignen sich alle bekannten Methoden, um die Orientierung eines Gegenstandes im Raum zu bestimmen.

Bevorzugt wird die aktuelle Orientierung der Detektoreinrichtung in allen Verfahrensschritten des erfindungsgemäßen Verfahrens zusätzlich berücksichtigt, die die aktuelle Position der Detektoreinrichtung heranziehen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: die Anwendung einer Vorrichtung zum Überprüfen von Objekteigenschaften eines Objektes in einem Untergrund mit einer Detektoreinrichtung, einer Lokalisierungseinrichtung und einer Kontrolleinrichtung;
- FIG. 2: eine Rückwand des Innenraums der FIG. 1 mit einem zu prüfenden ersten Objekt und einem zu prüfenden zweiten Objekt;
- FIG. 3: das Zusammenwirken der Detektoreinrichtung, der Lokalisierungseinrichtung und der Kontrolleinrichtung der in FIG. 1 gezeigten Vorrichtung in Form eines Blockdiagramms;
- FIG. 4: eine erste Ausführungsvariante des erfindungsgemäßen Verfahrens zum Überprüfen der Objekteigenschaften einer Stromleitung; und
- FIG. 5: eine zweite Ausführungsvariante des erfindungsgemäßen Verfahrens zum Überprüfen der Objekteigenschaften eines als Stromleitung ausgebildeten ersten Objektes und eines als Wasserleitung ausgebildeten zweiten Objektes.

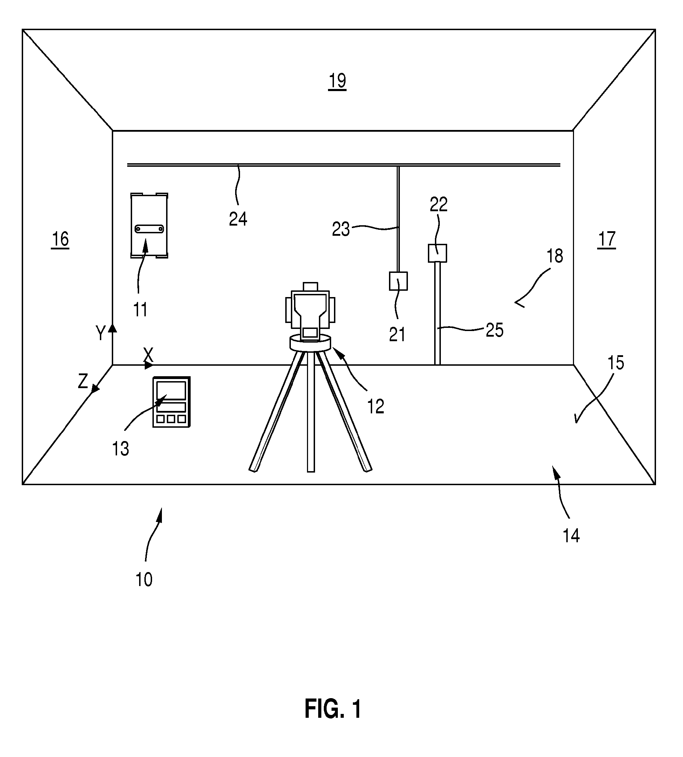

**FIG. 1** zeigt eine Vorrichtung **10** zur Durchführung des erfindungsgemäßen Verfahrens zum Überprüfen von Objekteigenschaften eines Objektes in einem Untergrund. Unter dem Begriff "Objekt" werden sämtliche Elemente, die in einem Untergrund angeordnet sind, zusammengefasst.

Die Vorrichtung 10 umfasst eine Detektoreinrichtung **11,** eine Lokalisierungseinrichtung **12** und eine Kontrolleinrichtung **13.** Die Detektoreinrichtung 11, Lokalisierungseinrichtung 12 und Kontrolleinrichtung 13 sind als separate Komponenten ausgebildet, die über Kommunikationsleitungen verbindbar sind und miteinander kommunizieren können. Die Kontrolleinrichtung 13 kann aber auch in die Detektionseinrichtung 11 integriert sein. Die Detektoreinrichtung 11 ist als handgeführte Detektoreinrichtung ausgebildet, die während der Messung über den Untergrund bewegt wird.

Bei Detektoreinrichtungen wird zwischen gehaltenen und geführten Detektoreinrichtungen unterschieden; eine gehaltene Detektoreinrichtung wird während der Messung ohne Vorschubbewegung über den zu detektierenden Untergrund gehalten und eine geführte Detektoreinrichtung wird während der Messung entlang einer linearen Bahn oder in einer beliebigen Bahn über den zu detektierenden Untergrund geführt. Als handgehalten bzw. handgeführt wird eine Detektoreinrichtung bezeichnet, die der Bediener mit der Hand über den zu detektierenden Untergrund hält oder führt. Die Ausführung als gehaltene oder geführte Detektoreinrichtung hängt unter anderem von den Abmessungen der zu prüfenden Objekte ab; bei länglichen Objekten, wie beispielsweise Stromleitungen, Wasserleitungen oder Armierungseisen, müssen in der Regel mehrere Messungen ausgeführt werden, um die Objekte vollständig zu erfassen.

Das erfindungsgemäße Verfahren wird anhand einer Messaufgabe in einem Innenraum **14** beschrieben. Der Innenraum 14 besteht aus einem Boden **15,** einer linken und rechten Seitenwand **16, 17,** einer Rückwand **18** und einer Decke **19.** Die Begrenzungen 15-19 des Innenraumes 14 werden unter dem Begriff "Untergrund" zusammengefasst. Der Innenraum 14 wird von einem dreidimensionalen Koordinatensystem **X, Y, Z** aufgespannt, dessen Koordinatenursprung (0, 0, 0) in der linken, unteren Ecke zwischen Boden 15, linker Seitenwand 16 und Rückwand 18 angeordnet ist. An der Rückwand 18 ist eine Küchenzeile mit Elektrogeräten vorgesehen. Zur Versorgung der Elektrogeräte sind Strom- und Wasseranschlüsse erforderlich, die in der Rückwand 18 angeordnet sind. Ein Backofen mit Dampffunktion erfordert einen Stromanschluss **21** und einen Wasseranschluss **22.** Der Stromanschluss 21 ist über eine vertikale Stromleitung **23** mit einer horizontal verlaufenden Stromleitung **24** verbunden und der Wasseranschluss 22 wird über eine Wasserleitung **25** versorgt.

Für die Messaufgabe werden die vertikale Stromleitung 23 als erstes Objekt und die Wasserleitung 25 als zweites Objekt definiert. Bei der Stromleitung 23 können das Material, der Abstand zu anderen Versorgungsleitungen und die Verwendung als Stark- oder Niederstromkabel zu prüfende Objekteigenschaften sein, die mittels der Detektoreinrichtung 11 überprüft werden sollen. Bei der Wasserleitung 25 zählen beispielsweise das Material (Kupfer oder Kunststoff), der Durchmesser, die Lage und die Verwendung als Warm- oder Kaltwasserleitung zu den Objekteigenschaften, die mittels der Detektoreinrichtung 11 überprüft werden können.

Voraussetzung für das erfindungsgemäße Verfahren ist, dass die Soll-Koordinaten des zu prüfenden Objektes bekannt sind. Die Soll-Koordinaten können beispielsweise in einem Konstruktionsplan enthalten sein. Als Konstruktionsplan wird eine technische Zeichnung eines Bauvorhabens bezeichnet, in der alle Informationen, die zur Herstellung eines Objektes erforderlich sind, dargestellt sind. Der Konstruktionsplan kann als Gesamtplan alle Objekte des Innenraums 14 umfassen oder als Teilplan nur einige Objekte enthalten. Für verschiedene Handwerker, wie Elektriker, Maurer, Installateur, sind unterschiedliche Objekte und Objekteigenschaften in einem Konstruktionsplan relevant.

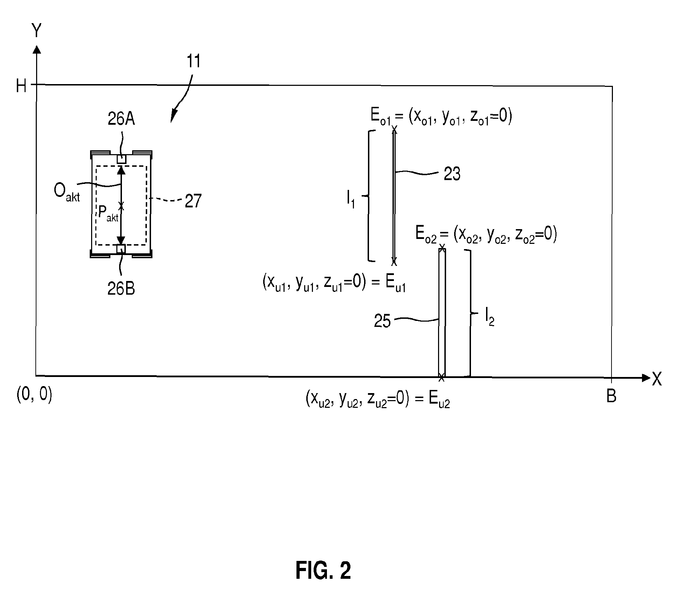

**FIG. 2** zeigt die Rückwand 18 des Innenraums 14 mit dem zu prüfenden ersten Objekt 23 und dem zu prüfenden zweiten Objekt 25, die in der Rückwand 18 angeordnet sind. Die Rückwand 18 liegt in der XY-Ebene des Koordinatensystems und sie weist in X-Richtung eine Breite **B** und in Y-Richtung eine Höhe **H** auf.

Bevor mittels der Detektoreinrichtung 11 eine Messung ausgeführt wird, muss die Detektoreinrichtung 11 über dem ersten Objekt 23, dem zweiten Objekt 25 oder dem ersten und zweiten Objekt 23, 25 positioniert werden. Dazu wird mittels der Lokalisierungseinrichtung 12 die aktuelle Position **Pₐₖₜ** mit den Koordinaten **xₐₖₜ, yₐₖₜ, zₐₖₜ** der Detektoreinrichtung 11 im Innenraum 14 bestimmt. Die aktuelle Position Pₐₖₜ der Detektoreinrichtung 11 wird mit Hilfe von zwei Lokalisierungsmarken **26A, 26B** bestimmt. Im Ausführungsbeispiel sind die Lokalisierungsmarken 26A, 26B auf der Oberseite der Detektoreinrichtung 11 angebracht. Aus der aktuellen Position der Detektoreinrichtung 11 bestimmt die Kontrolleinrichtung 13 ein aktuelles Detektionsfeld **27** der Detektoreinrichtung 11. Zwischen den Positionen der Lokalisierungsmarken 26A, 26B und dem Detektionsfeld 27 der Detektoreinrichtung 11 besteht ein bekannter Zusammenhang. Eine aktuelle Orientierung Oₐₖₜ der Detektoreinrichtung 11 kann ebenfalls mit Hilfe der Lokalisierungsmarken 26A, 26B bestimmt werden.

Nachdem die Kontrolleinrichtung 13 das aktuelle Detektionsfeld 27 der Detektoreinrichtung 11 bestimmt hat, werden die Soll-Koordinaten der Objekte 23, 25 von der Kontrolleinrichtung 13 mit dem aktuellen Detektionsfeld 27 der Detektoreinrichtung 11 verglichen. Die Soll-Koordinaten der zu prüfenden Objekte können in unterschiedlicher Form vorliegen. Bei länglichen Objekten, wie der Stromleitung 23 und der Wasserleitung 25, ist es vorteilhaft als Soll-Koordinaten mindestens einen Endpunkt, die Länge des Objektes und die Orientierung des Objektes anzugeben. Die Stromleitung 23 weist einen oberen Endpunkt **Eₒ₁** mit den Koordinaten **xₒ₁**, **yₒ₁**, **zₒ₁** und eine Länge **I₁** auf; sie ist als vertikale Stromleitung parallel zur Y-Richtung orientiert. Die Wasserleitung 25 weist einen oberen Endpunkt **Eₒ₂** mit den Koordinaten **xₒ₂, yₒ₂, zₒ₂,** eine Länge **I₂** und eine Orientierung parallel zur Y-Richtung auf. Alternativ zu den oberen Endpunkten Eₒ₁, Eₒ₂ der Objekte 23, 25 können die unteren Endpunkte **Eᵤ₁, Eᵤ₂** angegeben werden.

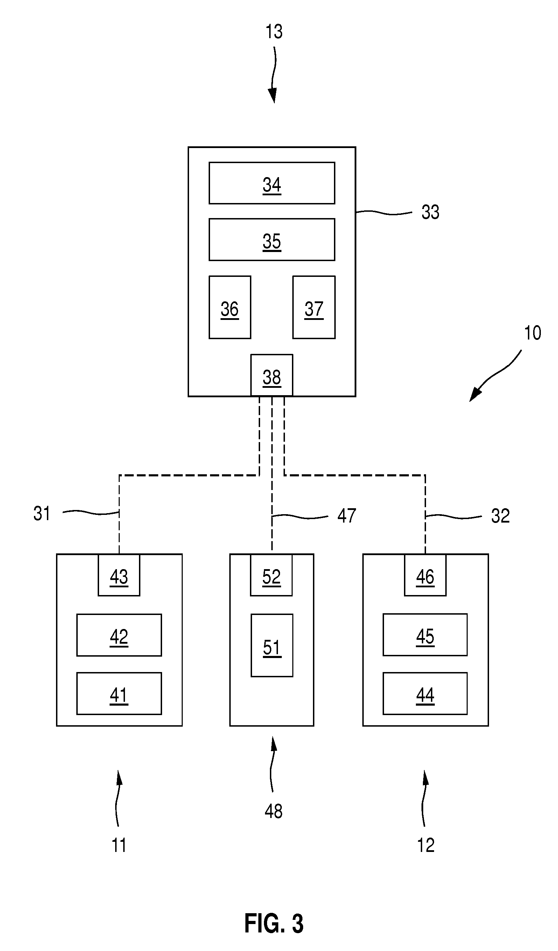

**FIG. 3** zeigt den Aufbau und das Zusammenwirken der Detektoreinrichtung 11, der Lokalisierungseinrichtung 12 und der Kontrolleinrichtung 13 in Form eines Blockdiagramms. Die Detektoreinrichtung 11, Lokalisierungseinrichtung 12 und Kontrolleinrichtung 13 sind im Ausführungsbeispiel als separate Komponenten ausgebildet, die über Kommunikationsverbindungen miteinander kommunizieren können.

Die Detektoreinrichtung 11 und die Kontrolleinrichtung 13 sind über eine erste Kommunikationsverbindung **31** miteinander verbindbar. Die Kontrolleinrichtung 13 ist über eine zweite Kommunikationsverbindung **32** mit der Lokalisierungseinrichtung 12 verbindbar. Die Kommunikationsverbindungen können als kabellose Kommunikationsverbindungen, beispielsweise als Funk-, Infrarot-, Bluetooth-, WLAN- oder Wi-Fi-Verbindungen, oder als kabelgebundene Kommunikationsverbindungen ausgebildet sein. Neben den aufgeführten kabellosen Verbindungstechnologien eignen sich sämtliche bereits bekannten und zukünftigen kabellosen Verbindungstechnologien zur Daten- und Bildübertragung.

Die Kontrolleinrichtung 13 umfasst ein Gehäuse **33,** in das eine Bedieneinrichtung **34** und ein Anzeigeeinrichtung **35** integriert sind. Die Bedieneinrichtung 34 und die Anzeigeeinrichtung 35 können wie in FIG. 2 gezeigt als separate Teile ausgebildet oder gemeinsam beispielsweise in einen Touchscreen integriert sein. Die Kontrolleinrichtung 13 weist außerdem ein Auswerte- und Steuerelement **36,** ein Speicherelement **37** und ein erstes Sende- und Empfangselement **38** auf.

Die Detektoreinrichtung 11 umfasst eine Sensoreinrichtung **41,** ein Steuerelement **42** zur Steuerung der Sensoreinrichtung 41 und ein zweites Sende- und Empfangselement **43.** Ausgehend vom ersten Sende- und Empfangselement 38 der Kontrolleinrichtung 13 wird die erste Kommunikationsverbindung zum zweiten Sende- und Empfangselement 43 der Detektoreinrichtung 11 aufgebaut. Die Steuerbefehle für die Detektoreinrichtung 11 werden von der Kontrolleinrichtung 13 über die erste Kommunikationsverbindung 31 an das Steuerelement 42 der Detektoreinrichtung 23 übermittelt. Die Sensoreinrichtung weist ein einzelnes Sensorelement oder mehrere Sensorelemente auf; die Sensorelemente können als induktive Sensoren, kapazitive Sensoren, Radarsensoren, Magnetfeldsensoren oder als sonstige, zum Detektieren von Objekten in Untergründen geeignete Sensoren ausgebildet sein.

Die Lokalisierungseinrichtung 12 umfasst eine Messeinrichtung **44,** ein Steuer- und Auswerteelement **45** zur Steuerung der Messeinrichtung 44 und zur Auswertung der Messwerte sowie ein drittes Sende- und Empfangselement **46.** Die Lokalisierungseinrichtung 12 ist beispielsweise als Totalstation und die Messeinrichtung 44 als Abstands- und Winkelmesseinrichtung ausgebildet. Ausgehend vom ersten Sende- und Empfangselement 38 der Kontrolleinrichtung 13 wird die zweite Kommunikationsverbindung 32 zum dritten Sende- und Empfangselement 46 der Lokalisierungseinrichtung 12 aufgebaut.

Der Konstruktionsplan kann im Speicherelement 37 der Kontrolleinrichtung 13 gespeichert sein. Die Kontrolleinrichtung 13 kann über eine dritte Kommunikationsverbindung **47** mit einem zentralen Speicher **48** verbunden werden. Unter dem Begriff "zentraler Speicher" werden sämtliche elektronischen Geräte zusammengefasst, die zur Archivierung von Daten dienen. Dazu gehören beispielsweise ein Server, ein Notebook, ein Computer, eine externe Festplatte und ein PDA. Über die dritte Kommunikationsverbindung 47 können Konstruktionspläne aus dem zentralen Speicher 48 an die Kontrolleinrichtung 13 übertragen und im Speicherelement 37 gespeichert werden oder bearbeitete Konstruktionspläne werden von der Kontrolleinrichtung 13 an den zentralen Speicher 48 übertragen und dort archiviert.

Der zentrale Speicher 48 umfasst eine Speichereinrichtung **51** und ein viertes Sende- und Empfangselement **52.** Ausgehend vom ersten Sende- und Empfangselement 38 der Kontrolleinrichtung 13 wird die dritte Kommunikationsverbindung 47 zum vierten Sende- und Empfangselement 52 des zentralen Speichers 48 aufgebaut. Daten in Form von Konstruktionsplänen, Foto- und Videodateien, etc. werden von der Kontrolleinrichtung 13 über die dritte Kommunikationsverbindung 47 an die Speichereinrichtung 51 übermittelt.

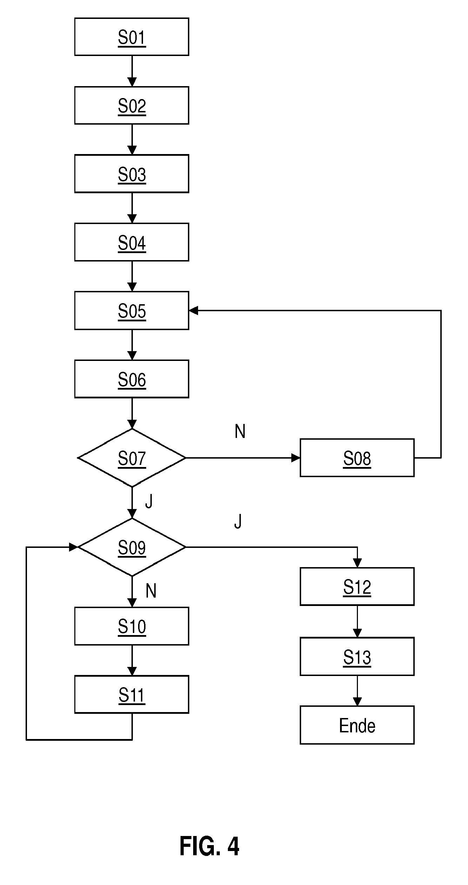

**FIG. 4** zeigt eine erste Ausführungsvariante des erfindungsgemäßen Verfahrens zum Überprüfen von Objekteigenschaften eines ersten Objektes anhand eines Ablaufdiagramms. Die erste Ausführungsvariante wird anhand der vertikal verlaufenden Stromleitung 23 beschrieben, die das zu prüfende erste Objekt bildet und die in der Rückwand 18 des Innenraumes 14 angeordnet ist.

Der Bediener wählt in einem Schritt **S01** mittels der Bedieneinrichtung 34 einen geeigneten Konstruktionsplan des Innenraumes 14 aus, der in die Kontrolleinrichtung 13 geladen wird. Verschiedene Konstruktionspläne des Innenraumes 14 können im Speicherelement 37 der Kontrolleinrichtung 13 gespeichert sein und der Bediener wählt einen geeigneten Konstruktionsplan aus. Alternativ kann der Bediener über die Bedieneinrichtung 34 die dritte Kommunikationsverbindung 47 zum zentralen Speicher 48 aufbauen und einen Konstruktionsplan aus der Speichereinrichtung 51 des zentralen Speichers 48 in die Kontrolleinrichtung 13 übertragen. In einem Schritt **S02** wählt der Bediener die Stromleitung 23 mit ihren Soll-Koordinaten (Eₒ₁, Eᵤ₁) als zu prüfendes Objekt aus dem Konstruktionsplan aus und legt die zu prüfenden Objekteigenschaften der Stromleitung 23 fest. Als zu prüfende Objekteigenschaft ist im Ausführungsbeispiel die Lage der Stromleitung 23 festgelegt.

Bei scannenden Detektoren und bei Objekten, deren Abmessungen grösser als die Abmessungen des Detektionsfeldes 27 sind, müssen mehrere Messungen mit der Detektoreinrichtung 11 ausgeführt und den zeitlich am nächstliegenden Positionsdaten der Lokalisierungseinrichtung 12 zugeordnet werden, um das Objekt vollständig zu erfassen; hier ist es vorteilhaft, die Messungen an einem Endpunkt des Objektes zu beginnen. Als Startpunkt für die Messungen kann vorab einer der Endpunkte Eₒ₁, Eᵤ₁ der Stromleitung 23 festgelegt sein oder die Kontrolleinrichtung 13 entscheidet während der Durchführung des Verfahrens, welcher Endpunkt Eₒ₁, Eᵤ₁ der Stromleitung 23 näher liegt und erstellt eine entsprechende Verstellanweisung für die Detektoreinrichtung 11. Im Ausführungsbeispiel der FIG. 4 ist der obere Endpunkt Eₒ₁ der Stromleitung 23 als Startpunkt für die Messungen festgelegt.

Der Bediener startet in einem Schritt **S03** über die Bedieneinrichtung 34 die Überprüfung der Objekteigenschaften der Stromleitung 23. In einem Schritt **S04** bestimmt die Lokalisierungseinrichtung 12 die aktuelle Position Pₐₖₜ und die aktuelle Orientierung Oₐₖₜ der Detektoreinrichtung 11 auf der Rückwand 18. Die aktuelle Position und Orientierung Pₐₖₜ, Oₐₖₜ der Detektoreinrichtung 11 werden in einem Schritt **S05** von der Lokalisierungseinrichtung 12 an die Kontrolleinrichtung 13 übertragen. In einem Schritt **S06** bestimmt die Kontrolleinrichtung 13 aus der aktuellen Position und Orientierung Pₐₖₜ, Oₐₖₜ der Detektoreinrichtung 11 das aktuelle Detektionsfeld 27 der Detektoreinrichtung 11. Anschließend werden die Soll-Koordinaten des oberen Endpunktes Eₒ₁ der Stromleitung 23 in einem Schritt **S07** von der Kontrolleinrichtung 13 mit dem aktuellen Detektionsfeld 27 der Detektoreinrichtung 11 verglichen. Dabei prüft die Kontrolleinrichtung 13 in Schritt S07, ob der obere Endpunkt Eₒ₁ der Stromleitung 23 innerhalb des aktuellen Detektionsfeldes 27 angeordnet ist.

Wenn der obere Endpunkt Eₒ₁ der Stromleitung 23 nicht innerhalb des aktuellen Detektionsfeldes 27 der Detektoreinrichtung 11 angeordnet ist (N in S07), berechnet die Kontrolleinrichtung 13 in einem Schritt **S08** aus der aktuellen Position Pₐₖₜ der Detektoreinrichtung 11 sowie den Soll-Koordinaten des oberen Endpunktes Eₒ₁ der Stromleitung 23 eine Verstellanweisung für die Detektoreinrichtung 11, die auf der Anzeigeeinrichtung 35 dargestellt wird. Das erfindungsgemäße Verfahren wird mit Schritt S05 fortgesetzt. Die aktuelle Position und Orientierung Pₐₖₜ, Oₐₖₜ der Detektoreinrichtung 11 werden von der Lokalisierungseinrichtung 12 mit einer Messfrequenz **f** bestimmt; die Messfrequenz f beträgt beispielsweise 1 Hz.

Ist der obere Endpunkt Eₒ₁ der Stromleitung 23 innerhalb des aktuellen Detektionsfeldes 27 angeordnet (J in S07), vergleicht die Kontrolleinrichtung 13 in einem Schritt **S09** die aktuelle Orientierung Oₐₖₜ der Detektoreinrichtung 11 mit der Orientierung des Objektes 23. Da die Stromleitung 23 parallel zur Y-Richtung verläuft, sollte die Detektoreinrichtung 11 entsprechend ausgerichtet werden und anschließend in Y-Richtung über die Stromleitung 23 bewegt werden. Zur genauen Detektion der Lage der Stromleitung 23 und insbesondere bei der Verwendung eines scannenden Detektors ist in der Regel eine schlangenförmige Bewegung über die Stromleitung 23 hinweg erforderlich, die durch eine Verstellanweisung der Kontrolleinrichtung 13 auf der Anzeigeeinrichtung 35 angezeigt wird.

Wenn die Detektoreinrichtung 11 nicht parallel zur Y-Richtung ausgerichtet ist (N in S09), erstellt die Kontrolleinrichtung 13 in einem Schritt **S10** für den Bediener eine Verstellanweisung, die auf der Anzeigeeinrichtung 35 dargestellt wird. Während der Drehbewegung der Detektoreinrichtung 11 durch den Bediener wird die aktuelle Orientierung Oₐₖₜ der Detektoreinrichtung 11 in einem Schritt **S11** mit Hilfe der Lokalisierungseinrichtung 12 ermittelt und das Verfahren anschließend mit Schritt S09 fortgesetzt. Ist die Detektoreinrichtung 11 parallel zur Y-Richtung ausgerichtet (J in S09), startet die Detektoreinrichtung 11 in einem Schritt **S12** die Ausführung einer Serie von Messungen mit Detektionsparametern, die an die Objekteigenschaften der Stromleitung 23 angepasst sind. Als Messgrößen für die Stromleitung 23 eignen sich beispielsweise magnetische und/oder elektrische Feldstärken. Über die Zuordnung der Messdaten der Detektoreinrichtung 11 zu den zeitlich nächstliegenden Positionsdaten der Lokalisierungseinrichtung 12 kann die tatsächliche Position und Orientierung der Stromleitung 23 ermittelt und mit den jeweiligen Soll-Koordinaten der Stromleitung 13 durch die Kontrolleinrichtung 13 verglichen werden. Das Ende der Messungen wird in einem Schritt **S13** auf der Anzeigeeinrichtung 35 dargestellt.

Bei der ersten Ausführungsvariante des erfindungsgemäßen Verfahrens werden die aktuelle Position Pₐₖₜ der Detektoreinrichtung 11 und die aktuelle Orientierung Oₐₖₜ der Detektoreinrichtung 11 in den Schritten S07 und S09 nacheinander mit den Soll-Koordinaten der Stromleitung 23 verglichen. Alternativ können die aktuelle Position Pₐₖₜ und aktuelle Orientierung Oₐₖₜ der Detektoreinrichtung 11 in einem gemeinsamen Verfahrensschritt mit den Soll-Koordinaten der Stromleitung 23 verglichen werden und auf der Anzeigeeinrichtung 35 kann anschließend eine Verstellanweisung für die Position und die Orientierung der Detektoreinrichtung 11 angezeigt werden.

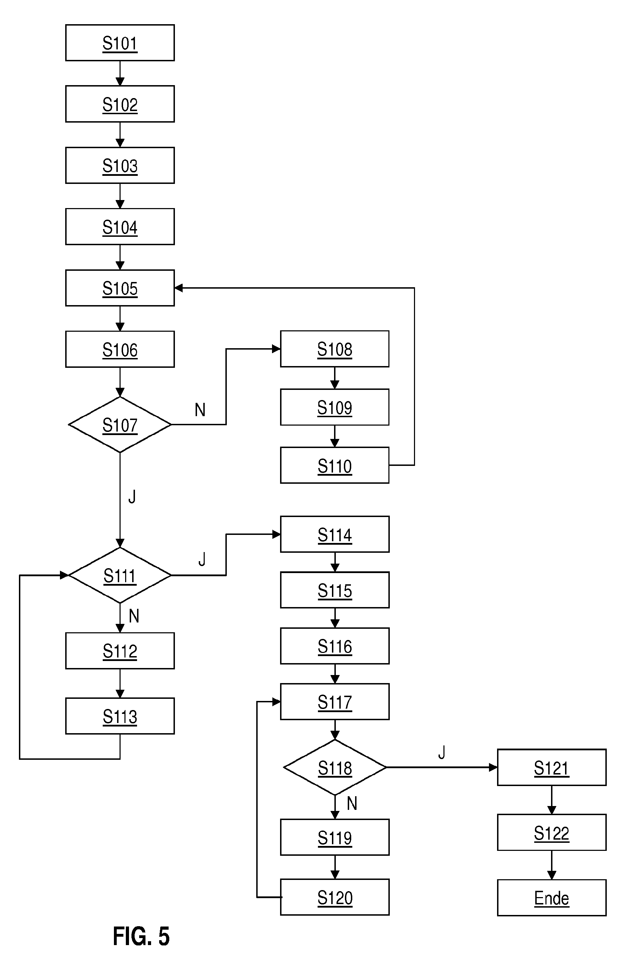

**FIG. 5** zeigt eine zweite Ausführungsvariante des erfindungsgemäßen Verfahrens zum Überprüfen der Objekteigenschaften eines ersten Objektes und eines zweiten Objektes anhand eines Ablaufdiagramms. Die zweite Ausführungsvariante wird anhand der Stromleitung 23, die das zu prüfende erste Objekt bildet, und der Wasserleitung 25, die das zu prüfende zweite Objekt bildet, beschrieben. Dabei sind die Stromleitung 23 und die Wasserleitung 25 in der Rückwand 18 des Innenraumes 14 angeordnet.

Als Startpunkt für die Messungen kann vorab eines der zu prüfenden Objekte 23, 25 festgelegt sein oder die Kontrolleinrichtung 13 entscheidet während der Durchführung des Verfahrens, welches Objekt 23, 25 näher liegt und erstellt eine entsprechende Verstellanweisung für die Detektoreinrichtung 11. Im Ausführungsbeispiel der FIG. 5 werden die Abstände bestimmt und miteinander verglichen. Da die Soll-Koordinaten der Objekte 23, 25 und damit auch die Abmessungen Objekte 23, 25 vor der Durchführung des Verfahrens bekannt sind, steht vorab fest, ob ein Objekt mit einer Messung erfasst werden kann oder ob die Detektoreinrichtung 11 über das Objekt bewegt und gleichzeitig eine Serie von Messungen durchgeführt werden muss. Im Ausführungsbeispiel sind die Länge I₁ der Stromleitung 23 und die Länge I₂ der Wasserleitung 25 grösser als die Abmessungen des Detektionsfeldes 27 der Detektoreinrichtung 11, so dass mehrere Messungen mit der Detektionseinrichtung 11 und der Lokalisierungseinrichtung 12 durchgeführt werden müssen, um die Objekte 23, 25 vollständig zu erfassen. Bei scannenden Detektoren sind in jedem Fall mehrere Messungen erforderlich.

Der Bediener wählt in einem Schritt **S101** einen geeigneten Konstruktionsplan des Innenraumes 14 aus, der in die Kontrolleinrichtung 13 geladen wird. In einem Schritt **S102** wählt der Bediener die Stromleitung 23 als zu prüfendes erstes Objekt und die Wasserleitung 25 als zu prüfendes zweites Objekt aus dem Konstruktionsplan aus und legt die zu prüfenden Objekteigenschaften der Stromleitung 23 und der Wasserleitung 25 fest. Nachdem die Objekte 23, 25 und die zu prüfenden Objekteigenschaften in Schritt S102 festgelegt wurden, startet der Bediener in einem Schritt **S103** die Überprüfung der Objekteigenschaften über die Bedieneinrichtung 34.

Die Lokalisierungseinrichtung 12 ermittelt in einem Schritt **S104** die aktuelle Position Pₐₖₜ und die aktuelle Orientierung Oₐₖₜ der Detektoreinrichtung 11 auf der Rückwand 18. Die aktuelle Position und Orientierung Pₐₖₜ, Oₐₖₜ der Detektoreinrichtung 11 werden in einem Schritt **S105** von der Lokalisierungseinrichtung 12 an die Kontrolleinrichtung 13 übertragen, die in einem Schritt **S106** aus der aktuellen Position und Orientierung der Detektoreinrichtung 11 das aktuelle Detektionsfeld 27 bestimmt. Anschließend wird das aktuelle Detektionsfeld 27 in einem Schritt **S107** von der Kontrolleinrichtung 13 mit den Soll-Koordinaten der Stromleitung 23 und den Soll-Koordinaten der Wasserleitung 25 verglichen.

Wenn weder ein Endpunkt Eₒ₁, Eᵤ₁ der Stromleitung 23 noch ein Endpunkt Eₒ₂, Eᵤ₂ der Wasserleitung 25 innerhalb des aktuellen Detektionsfeldes 27 der Detektoreinrichtung 11 angeordnet ist (N in S107), berechnet die Kontrolleinrichtung 13 in einem Schritt **S108** einen ersten Abstand **d₁** zwischen der Stromleitung 23 und der aktuellen Position Pₐₖₜ der Detektoreinrichtung 11 sowie einen zweiten Abstand **d₂** zwischen der Wasserleitung 25 und der aktuellen Position Pₐₖₜ der Detektoreinrichtung 11.

Die Kontrolleinrichtung 13 erstellt für das Objekt mit dem geringeren Abstand zur aktuellen Position Pₐₖₜ der Detektoreinrichtung 11 in einem Schritt **S109** eine Verstellanweisung für die Detektoreinrichtung 11, die auf der Anzeigeeinrichtung 35 dargestellt wird. Während der Bewegung der Detektoreinrichtung 11 durch den Bediener werden die aktuelle Position Pₐₖₜ und aktuelle Orientierung Oₐₖₜ der Detektoreinrichtung 11 in einem Schritt **S110** mit Hilfe der Lokalisierungseinrichtung 12 ermittelt und das Verfahren wird mit Schritt S105 fortgesetzt. Wenn ein Endpunkt Eₒ₁, Eᵤ₁ der Stromleitung 23 oder ein Endpunkt Eₒ₂, Eᵤ₂ der Wasserleitung 25 innerhalb des aktuellen Detektionsfeldes 27 angeordnet ist (J in S107), vergleicht die Kontrolleinrichtung 13 in einem Schritt **S111** die aktuelle Orientierung Oₐₖₜ der Detektoreinrichtung 11 mit der Orientierung des innerhalb des Detektionsfeldes 27 angeordneten Objektes.

Weicht die aktuelle Orientierung Oₐₖₜ der Detektoreinrichtung 11 von der Orientierung des zu prüfenden Objektes ab (N in S111), erstellt die Kontrolleinrichtung 13 in einem Schritt **S112** eine Verstellanweisung für die Detektoreinrichtung 11, die auf der Anzeigeeinrichtung 35 dargestellt wird. Während der Drehbewegung der Detektoreinrichtung 11 durch den Bediener wird die aktuelle Orientierung Oₐₖₜ der Detektoreinrichtung 11 in einem Schritt **S113** mit Hilfe der Lokalisierungseinrichtung 12 ermittelt und das Verfahren mit Schritt S111 fortgesetzt.

Entspricht die aktuelle Orientierung Oₐₖₜ der Detektoreinrichtung 11 der Orientierung des Objektes (J in S111), erstellt die Kontrolleinrichtung 13 in einem Schritt **S114** eine Verstellanweisung für die Detektoreinrichtung 11 und startet eine Serie von Messungen mit der Detektoreinrichtung 11; dabei sind die Detektionsparametern an die zu prüfenden Objekteigenschaften angepasst. Das Ende der Messungen für das zu prüfende Objekt wird in einem Schritt **S115** auf der Anzeigeeinrichtung 35 dargestellt und das Verfahren für das weitere zu prüfende Objekt fortgesetzt.

Die aktuelle Position Pₐₖₜ und aktuelle Orientierung Oₐₖₜ der Detektoreinrichtung 11 werden in einem Schritt **S116** mit Hilfe der Lokalisierungseinrichtung 12 bestimmt und an die Kontrolleinrichtung 13 übermittelt. Die Kontrolleinrichtung 13 bestimmt in einem Schritt **S117** aus der aktuellen Position und Orientierung Pₐₖₜ, Oₐₖₜ der Detektoreinrichtung 11 das aktuelle Detektionsfeld 27 und vergleicht das aktuelle Detektionsfeld 27 in einem Schritt **S118** mit den Soll-Koordinaten (Endpunkte, Orientierung) des zu prüfenden Objektes.

Wenn kein Endpunkt des Objektes innerhalb des aktuellen Detektionsfeldes 27 der Detektoreinrichtung 11 angeordnet ist und/oder die Orientierung des Objektes von der aktuelle Orientierung Oₐₖₜ der Detektoreinrichtung 11 abweicht (N in S118), berechnet die Kontrolleinrichtung 13 in einem Schritt **S119** aus der aktuellen Position und Orientierung Pₐₖₜ, Oₐₖₜ der Detektoreinrichtung 11 sowie den Soll-Koordinaten des Objektes (Endpunkte und Orientierung) eine Verstellanweisung für die Detektoreinrichtung 11, die auf der Anzeigeeinrichtung 35 dargestellt wird. Während der Bewegung der Detektoreinrichtung 11 durch den Bediener werden die aktuelle Position Pₐₖₜ und aktuelle Orientierung Oₐₖₜ der Detektoreinrichtung 11 in einem Schritt **S120** mit Hilfe der Lokalisierungseinrichtung 12 ermittelt und das Verfahren wird mit Schritt S117 fortgesetzt.

Wenn ein Endpunkt des Objektes innerhalb des aktuellen Detektionsfeldes 27 der Detektoreinrichtung 11 angeordnet ist und die Orientierung des Objektes der aktuelle Orientierung Oₐₖₜ der Detektoreinrichtung 11 entspricht (J in S118), erstellt die Kontrolleinrichtung 13 in einem Schritt **S121** eine Verstellanweisung für die Detektoreinrichtung 11 und startet eine Serie von Messungen mit der Detektoreinrichtung 11; dabei sind die Detektionsparametern an die zu prüfenden Objekteigenschaften angepasst. Das Ende der Messungen für das zu prüfende Objekt wird in einem Schritt **S122** auf der Anzeigeeinrichtung 35 dargestellt. Das erfindungsgemäße Verfahren ist nach Schritt S122 beendet.

## Patentansprüche

1. Verfahren zum Überprüfen von Objekteigenschaften eines Objektes (23, 25) in einem Untergrund (18) mittels einer Vorrichtung (10), die eine Detektoreinrichtung (11), eine Lokalisierungseinrichtung (12) und eine Kontrolleinrichtung (13) aufweist, wobei:
▪ in einem ersten Schritt ein erstes Objekt (23) mit mindestens einer zu prüfenden ersten Objekteigenschaft (A₁) und ersten Soll-Koordinaten (Eₒ₁, Eᵤ₁) ausgewählt wird,
▪ in einem zweiten Schritt mittels der Lokalisierungseinrichtung (12) eine aktuelle Position (Pₐₖₜ) der Detektoreinrichtung (11) in einem Raum (14) bestimmt wird,
▪ in einem dritten Schritt von der Kontrolleinrichtung (13) aus der aktuellen Position (Pₐₖₜ) der Detektoreinrichtung (11) ein aktuelles Detektionsfeld (27) bestimmt wird und
▪ in einem vierten Schritt die ersten Soll-Koordinaten (Eₒ₁, Eᵤ₁) von der Kontrolleinrichtung (13) mit dem aktuellen Detektionsfeld (27) der Detektoreinrichtung (11) verglichen werden.

2. Verfahren nach Anspruch 1, **dadurch gekennzeichnet, dass** mittels der Detektoreinrichtung (11) mindestens eine Messung im Untergrund (18) ausgeführt wird, wenn die ersten Soll-Koordinaten (Eₒ₁, Eᵤ₁) des ersten Objektes (23) innerhalb des aktuellen Detektionsfeldes (27) angeordnet sind.

3. Verfahren nach Anspruch 2, **dadurch gekennzeichnet, dass** die Messung von der Detektoreinrichtung (11) mit Detektionsparametern ausgeführt wird, die an die ersten Objekteigenschaften (A₁) des ersten Objektes (23) angepasst sind.

4. Verfahren nach Anspruch 1, **dadurch gekennzeichnet, dass** aus der aktuellen Position (Pₐₖₜ) der Detektoreinrichtung (11) und den ersten Soll-Koordinaten des ersten Objektes (23) von der Kontrolleinrichtung (13) eine Verstellanweisung für die Detektoreinrichtung (11) berechnet und auf einer Anzeigeeinrichtung (35) dargestellt wird, wenn die ersten Soll-Koordinaten des ersten Objektes (23) zumindest teilweise außerhalb des aktuellen Detektionsfeldes (27) angeordnet sind.

5. Verfahren nach Anspruch 1, **dadurch gekennzeichnet, dass** von der Kontrolleinrichtung (13) eine Verstellanweisung für die Detektoreinrichtung (11) berechnet und auf einer Anzeigeeinrichtung (35) dargestellt und während der Bewegung mittels der Detektoreinrichtung (11) eine Reihe von Messungen im Untergrund (18) ausgeführt wird, wenn die ersten Soll-Koordinaten des ersten Objektes (23) teilweise innerhalb des aktuellen Detektionsfeldes (27) angeordnet und die Abmessungen (I₁) des ersten Objektes (23) grösser als das aktuelle Detektionsfeld (27) sind.

6. Verfahren nach Anspruch 1, wobei:
▪ im ersten Schritt zusätzlich neben dem ersten Objekt (23) ein zweites Objekt (25) mit zu prüfenden zweiten Objekteigenschaften und zweiten Soll-Koordinaten (Eₒ₂, Eᵤ₂) ausgewählt wird und
▪ im vierten Schritt neben den ersten Soll-Koordinaten (Eₒ₁, Eᵤ₁) des ersten Objektes (23) zusätzlich die zweiten Soll-Koordinaten (Eₒ₂, Eᵤ₂) des zweiten Objektes (25) von der Kontrolleinrichtung (13) mit dem aktuellen Detektionsfeld (27) der Detektoreinrichtung (11) verglichen werden.

7. Verfahren nach Anspruch 6, **dadurch gekennzeichnet, dass** mittels der Detektoreinrichtung (11) mindestens eine Messung im Untergrund (18) ausgeführt wird, wenn die ersten Soll-Koordinaten (Eₒ₁, Eᵤ₁) des ersten Objektes (23) oder die zweiten Soll-Koordinaten (Eₒ₂, Eᵤ₂) des zweiten Objektes (25) innerhalb des aktuellen Detektionsfeldes (27) der Detektoreinrichtung (11) angeordnet sind.

8. Verfahren nach Anspruch 7, **dadurch gekennzeichnet, dass** die mindestens eine Messung von der Detektoreinrichtung (11) mit Detektionsparametern ausgeführt wird, die an die Objekteigenschaften des innerhalb des aktuellen Detektionsfeldes (27) angeordneten Objektes angepasst sind.

9. Verfahren nach einem der Ansprüche 7 bis 8, **dadurch gekennzeichnet, dass** nach der Messung mit der Detektoreinrichtung (11) aus der aktuellen Position (Pₐₖₜ) der Detektoreinrichtung (11) und den Soll-Koordinaten des außerhalb des aktuellen Detektionsfeldes (27) angeordneten Objektes von der Kontrolleinrichtung (13) eine Verstellanweisung für die Detektoreinrichtung (11) berechnet und auf einer Anzeigeeinrichtung (35) dargestellt wird.

10. Verfahren nach Anspruch 6, **dadurch gekennzeichnet, dass** mittels der Detektoreinrichtung (11) mindestens eine Messung im Untergrund ausgeführt wird, wenn die ersten Soll-Koordinaten (Eₒ₁, Eᵤ₁) des ersten Objektes (23) und die zweiten Soll-Koordinaten (Eₒ₂, Eᵤ₂) des zweiten Objektes (25) innerhalb des aktuellen Detektionsfeldes (27) der Detektoreinrichtung (11) angeordnet sind.

11. Verfahren nach Anspruch 10, **dadurch gekennzeichnet, dass** mittels der Detektoreinrichtung (11) eine erste Messung mit ersten Detektionsparametern, die an die ersten Objekteigenschaften des ersten Objektes (23) angepasst sind, und eine zweite Messung mit zweiten Detektionsparametern, die an die zweiten Objekteigenschaften des zweiten Objektes (25) angepasst sind, ausgeführt wird.

12. Verfahren nach Anspruch 6, **dadurch gekennzeichnet, dass** aus der aktuellen Position (Pₐₖₜ) der Detektoreinrichtung (11) sowie den ersten und zweiten Soll-Koordinaten des ersten und zweiten Objektes (23, 25) von der Kontrolleinrichtung (13) ein erster und zweiter Abstand (d₁, d₂) berechnet werden, wenn die Soll-Koordinaten des ersten und zweiten Objektes (23, 25) außerhalb des aktuellen Detektionsfeldes (27) der Detektoreinrichtung (11) angeordnet sind.

13. Verfahren nach Anspruch 12, **dadurch gekennzeichnet, dass** der erste und zweite Abstand (d₁, d₂) von der Kontrolleinrichtung (13) miteinander verglichen werden und für das Objekt mit dem geringeren Abstand zur aktuellen Position der Detektoreinrichtung (11) von der Kontrolleinrichtung (13) eine Verstellanweisung für die Detektoreinrichtung (11) berechnet und auf einer Anzeigeeinrichtung (35) dargestellt wird.

14. Verfahren nach Anspruch 1, **dadurch gekennzeichnet, dass** im zweiten Schritt mittels der Lokalisierungseinrichtung (12) zusätzlich eine aktuelle Orientierung (Oₐₖₜ) der Detektoreinrichtung (11) bestimmt wird.

15. Verfahren nach Anspruch 14, **dadurch gekennzeichnet, dass** im dritten Schritt das aktuelle Detektionsfeld (27) der Detektoreinrichtung (11) aus der aktuellen Position (Pₐₖₜ) und der aktuellen Orientierung (Oₐₖₜ) der Detektoreinrichtung (11) bestimmt wird.
